# EUROPEAN PATENT APPLICATION

(11) **EP 2 158 810 A2**
(43) Date of publication of application: **03.03.2010**
(21) Application number: 09075365.8
(22) Date of filing: 12.08.2009
(51) Int. Cl.: A01J 5/017, A01K 1/12

(54) **Automatic milking device and method of controlling an automatic milking device**

(30) Priority: 26.08.2008 NL 1035870
(71) Applicant: Lely Patent N.V., 3147 PA Maassluis (NL)
(72) Inventor: Kortekaas, Martinus Petrus, 2161 XJ Lisse (NL)
(74) Representative: Corten, Maurice Jean F.M.

(57) **Abstract**

The invention provides an automatic milking device for milking a dairy animal, comprising a control device (11) and a weighing floor (9) with weight sensors (10-1 - 10-4) for supplying weight signals, and with a filter for filtering the weight signals into a filtered signal indicative of the position of the centre of gravity of the dairy animal, wherein the control device (11) is configured for controlling the milking by the automatic milking device on the basis of the weight signal filtered by the filter. The control device (11) is arranged for controlling the automatic milking device on the basis of the unfiltered weight signal after the milking has been finished. As a result thereof, it is possible to respond more quickly to movements of the dairy animal, without the filter having a decelerating effect. The invention also provides a method of controlling the automatic milking device in this manner.

## Description

The present invention relates to an automatic milking device for milking a dairy animal, comprising a control device and a weighing floor with at least one weight sensor for supplying weight signals, and with a filter for filtering the weight signal, wherein the control device is configured for controlling the milking by the automatic milking device on the basis of the weight signal filtered by the filter.

Document EP 0736246 discloses a device in which a centre of gravity is determined from forces exerted on a weighing floor by the legs of the dairy animal, and from the positions of these forces. On the basis of the calculated centre of gravity the robot arm can be moved in the direction of the udder, in particular also in the case when the animal moves in the milking box.

It has been found in practice that this known device does not function properly in all situations, in particular when milking has been finished. In particular in the non-published European patent application number 08075316.3 this disadvantage is obviously present, because in this case the weight signal is expressly filtered temporally, in order to determine movement of the centre of gravity on the basis thereof. On the one hand, this filtering is necessary to be able to calculate the position and movement of the centre of gravity, on the other hand to be able to remove outliers in the signals.

It is an object of the present invention to have the device function more reliably, in particular after the milking has been finished.

This object is achieved at least partly by means of the automatic milking device according to claim 1, which is **characterized in that** the control device is configured for controlling the automatic milking device on the basis of the unfiltered weight signal after the milking has been finished. Owing to this, the device is able to respond more quickly to variations in the weight signal, and, consequently, to function more reliably. For, where it was advantageous to filter the signals during milking, it is advantageous to have the device not doing this after the milking has been finished. The gain of time is, for example, advantageous to control components of the milking device which have nothing to do with the milking proper. For example, for controlling such components, it may be sufficient to know whether a dairy animal is present, for which purpose the presence of one signal at one of the weight sensors is sufficient. By no longer filtering that signal it will sooner be available for the device. For, the filtering will take some time, certainly in the case when it involves, for example, time averaging.

Favourable embodiments are described in the sub-claims. In principle, it is sufficient to provide only one weight sensor, which, for example, is indeed direction sensitive. On the basis of the signals obtained thereby it is possible to determine the position of the centre of gravity, and of course the weight, in a sufficiently accurate manner. Advantageously, a plurality of weight sensors are provided. These may often be designed more simply, such as, for example, pure weight meters, without direction sensitivity. It is possible to determine in a simple and accurate manner, from the different weights as well as from the known positions, the weight and the position of the centre of gravity.

In particular, the filter is switchable between a filtering position and a position for transmitting the weight signal in an unfiltered manner, wherein the control device is configured for switching the filter. In this case, the control device is, for example, configured for switching the filter after a signal finishing the milking or indicating that the milking has been finished. Consequently, from the moment of finishing the milking, the filter will be switched, in order to transmit the weight signal immediately. As a result thereof, the control system is able respond more quickly to variations in the weight signal. By means of this feature, it will thus be possible for the control system to avail of the desired quicker signal. Switching of the filter can be achieved in this case by diverting the signal along the filter network, via a relay or the like, or for example by setting an average time of zero or a filter constant equal to 1. It should be noted that the milking should be understood as a complete treatment, which may also comprise cleaning, dipping and the like, i.e. as a teat related treatment for which it is important to know the centre of gravity of the cow. It will be possible to have the switching of the filter from the non-filtering position to the filtering position take place from the signal to start the milking, i.e. the extensive variant of the milking, comprising pre-treatment, etc. Until that time the weight signal will thus preferably be transmitted in an unfiltered manner, and the control device is configured accordingly.

A favourable embodiment is **characterized in that** it further comprises a robot arm which is controllable by the control device for applying teat cups to teats. The above mentioned "milking finished" signal is known in the state of the art and is in practice for example accompanied by an action to remove the teat cups. If the robot arm was controlled on the basis of the filtered signal, from the moment of removal of the teat cups it will be less relevant to control the robot arm in this manner. It is now sufficient to control the robot arm on the basis of the unfiltered weight signal.

In a favourable embodiment of the device according to the invention, it further comprises a milking box with a gate which is controllable by the control device, in particular an exit gate, the closing of which, and optionally also the opening of which, is controllable on the basis of the weight signal, in particular the unfiltered weight signal. In particular in this case, the greater reaction rate of the control device is advantageous, because it is possible to respond more quickly to varying weight signals. In particular if the dairy animal leaves a milking box, it is important to know whether the dairy animal is still partly present in the milking box. If this is the case, i.e. not yet all weight sensors supply a zero signal, the exit gate cannot or may not yet be closed. If, however, there is a time delay in the weight signal, said closing will take place unnecessarily late. By means of the invention it will be possible to respond much more quickly to the actual leaving of the box. But, for example, also in the case of panic when a dairy animal enters or leaves the milking box, in which case a very fast variation of the weight signals will occur, a quick and accurate control of the one or more gates is desired.

The invention also relates to a method of controlling an automatic milking device for milking a dairy animal, comprising a control device and a weighing floor with at least two weight sensors for supplying weight signals, and with a filter for filtering the weight signals into a filtered signal indicative of the position of the centre of gravity of the dairy animal, comprising the control of the milking by the automatic milking device on the basis of the weight signal filtered by the filter, **characterized in that** the automatic milking device is controlled on the basis of the unfiltered weight signal after the milking has been finished. Again it should be noted that "milking" should be understood here as any teat related action, such as cleaning, foremilking, stimulating or dipping. In particular, the automatic milking device will, also prior to the beginning of that teat related action, be controlled on the basis of the unfiltered weight signal

In particular, the automatic milking device comprises a robot arm, and the robot arm is controlled on the basis of the unfiltered weight signal after the teat related action, especially milking, has been finished. In embodiments, the automatic milking device comprises a milking box with a gate which is controllable by the control device, in particular an exit gate, the closing of which, and optionally also the opening of which, is controlled on the basis of the weight signal, in particular the unfiltered weight signal. For, such gates are only operated when a teat related action is not involved.

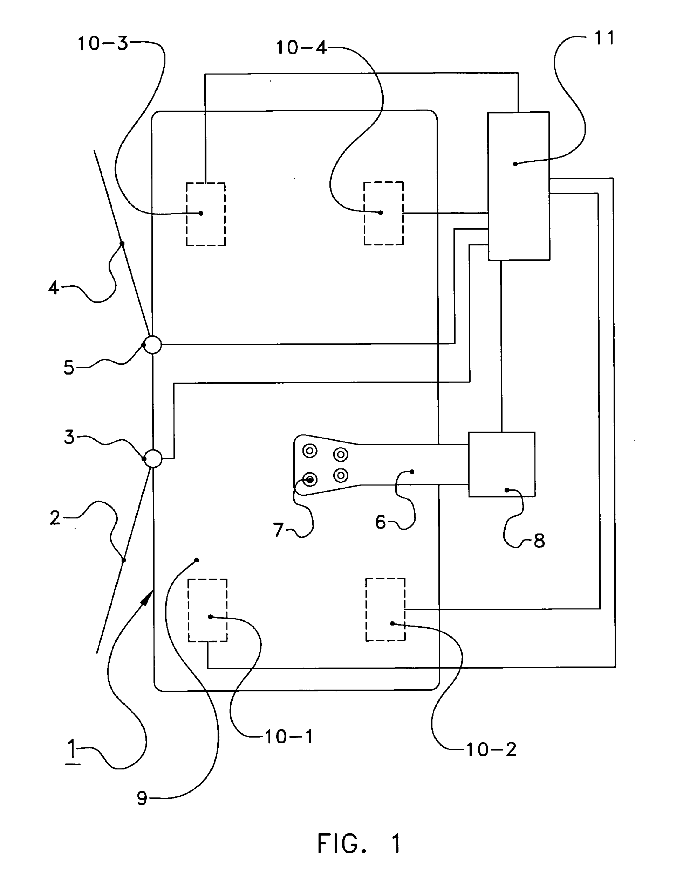

The invention will be described below with reference to examples shown in the accompanying figures, of which Figure 1 is a schematic top view of a milking device according to the invention.

Figure 1 shows an automatic milking device comprising a milking box 1 having an entrance gate 2, an entrance gate operating means 3, an exit gate 4 and an exit gate operating means 5, also comprising a robot arm 6 with teat cups 7 and a robot arm operating means 8. By 9 is denoted a weighing floor, here with four weighing sensors 10-1 to 10-4, while 11 denotes a control device.

Here, the weighing floor 9 comprises four weight sensors 10-1 to 10-4, which are for example piezoelectric cells or load cells. The number may also be smaller or larger. These sensors each supply a weight signal according to their load. On the basis of these signals and the known position of the sensors it is possible to determine the centre of gravity of a dairy animal present on the weighing floor 9.

The control device 11 is connected both to the weighing sensors 10-1 to 10-4 and to the gate operating means 3 and 5 and the robot arm operating means 8. This control device comprises a non-shown filter which filters the weight signals, and possibly further processes them, to a centre of gravity. This filtered centre of gravity, i.e. the filtered weight signal, can be used by the control device 11 to control the robot arm 6 by means of the robot arm operating means 8, in order to follow the cow in a controlled manner. This cow following takes place by means of a filtered signal, in order to damp, for example, measurement errors, but also to control the movements of the robot arm in an efficient manner, to prevent unrest with the dairy animals. This filtering is time-consuming, and after the teat related action has been finished this is no longer necessary. The filter can then be put out of operation and the weight signal can be transmitted in an unfiltered manner. The gate operating means 3 and 5 can also be operated as described in the preamble. It should be noted that the filter may be part of a computer program which is configured for controlling the control device 11, and then forms a sort of signal processing program.

The exemplary embodiment shown only serves as an illustration of the invention, and not as a limitation thereof. The scope of protection is determined by the accompanying claims.

## Claims

1. Automatic milking device for milking a dairy animal, comprising a control device (11) and a weighing floor (9) with at least one, and advantageously at least two, weight sensors (10-1 - 10-4) for supplying weight signals, and with a filter for filtering the weight signals into a filtered signal indicative of the position of the centre of gravity of the dairy animal, wherein the control device (11) is configured for controlling the milking by the automatic milking device on the basis of the weight signal filtered by the filter, **characterized in that** the control device (11) is configured for controlling the automatic milking device on the basis of the unfiltered weight signal after the milking has been finished.

2. Device according to claim 1, wherein the filter is switchable between a filtering position and a position for transmitting the weight signal in an unfiltered manner, wherein the control device (11) is configured for switching the filter.

3. Device according to one of the preceding claims, further comprising a robot arm (6) which is controllable by the control device (11) for applying teat cups (7) to teats.

4. Device according to one of the preceding claims, further comprising a milking box (1) with a gate which is controllable by the control device (11), in particular an exit gate (4), the closing of which, and optionally also the opening of which, is controllable on the basis of the weight signal, in particular the unfiltered weight signal.

5. Method of controlling an automatic milking device for milking a dairy animal, comprising a control device (11) and a weighing floor (9) with at least two weight sensors (10-1 - 10-4) for supplying weight signals, and with a filter for filtering the weight signals into a filtered signal indicative of the position of the centre of gravity of the dairy animal, comprising the control of the milking by the automatic milking device on the basis of the weight signal filtered by the filter, **characterized in that** the automatic milking device is controlled on the basis of the unfiltered weight signal after the milking has been finished.

6. Method according to claim 5, wherein the automatic milking device comprises a robot arm (6), and the robot arm (6) is controlled on the basis of the unfiltered weight signal after the milking has been finished.

7. Method according to claim 5 or 6, wherein the automatic milking device comprises a milking box (1) with a gate which is controllable by the control device (11), in particular an exit gate (4), the closing of which, and optionally also the opening of which, is controlled on the basis of the weight signal, in particular the unfiltered weight signal.
